# FASCICULE DE BREVET EUROPEEN

(11) **EP 3 345 013 B1**
(45) Date de publication et mention de la délivrance du brevet: **31.07.2019**
(21) Numéro de dépôt: 16767001.7
(22) Date de dépôt: 31.08.2016
(51) Int. Cl.: G01S 5/06, G01S 5/12, G01S 5/02, H04K 3/00

(54) **CHARGE UTILE D'UN SATELLITE DE MESURE D'UN SYSTÈME DE LOCALISATION ET PROCÉDÉ DE LOCALISATION**
NUTZLAST DES MESSSATELLITEN EINES POSITIONIERUNGSSYSTEMS UND POSITIONIERUNGSVERFAHREN
PAYLOAD OF A POSITIONING SYSTEM MEASUREMENT SATELLITE, AND POSITIONING METHOD

(30) Priorité: 03.09.2015 FR 1558170
(43) Date de publication de la demande: 11.07.2018
(73) Titulaire: Airbus Defence and Space SAS, 31402 Toulouse Cedex 4 (FR); Centre National d'Etudes Spatiales (CNES), 75001 Paris (FR)
(72) Inventeur: VOULOUZAN, Frédéric, 31402 Toulouse Cedex 4 (FR); SANCHEZ, Raphaël, 31402 Toulouse Cedex 4 (FR); AYMES, Jean-Marc, 31402 Toulouse Cedex 4 (FR)
(74) Mandataire: Ipside
(86) Numéro de dépôt international: PCT/FR2016/052153
(87) Numéro de publication internationale: WO 2017/037382

(56) Documents cités:
- CN-A- 104 297 723
- FR-A1- 2 801 682
- US-A- 5 008 679
- US-A1- 2014 154 972

## Description

### DOMAINE TECHNIQUE

La présente invention appartient au domaine des systèmes de télécommunications par satellite, et concerne plus particulièrement la localisation d'un émetteur terrestre d'un signal cible qui est reçu par un satellite d'un système de télécommunications par satellite.

La présente invention trouve une application particulièrement avantageuse pour la localisation d'émetteurs parasites, mais est applicable de manière plus générale à la localisation de tout type d'émetteur terrestre.

### ÉTAT DE LA TECHNIQUE

De manière générale, on entend par « satellite d'un système de télécommunications par satellite » tout satellite adapté à recevoir, sur un lien montant, des données émises depuis la Terre, et à retransmettre (de façon transparente ou régénérative), sur un lien descendant, tout ou partie desdites données à destination de la Terre.

Les systèmes de télécommunications par satellite sont très sensibles aux émetteurs parasites. En effet, un signal parasite reçu sur le lien montant d'un satellite sera retransmis sur le lien descendant dudit satellite et brouillera de nombreuses communications effectuées par l'intermédiaire dudit satellite.

Il est donc particulièrement important de pouvoir détecter et localiser de tels émetteurs parasites, afin de pouvoir prendre des mesures pour faire cesser le brouillage. Ces mesures sont, par exemple, une intervention auprès des autorités locales dont dépend l'émetteur parasite afin qu'elles fassent cesser l'émission du signal parasite.

Les méthodes de localisation actuelles d'un émetteur parasite d'un signal parasite reçu par un satellite, dit satellite principal, reposent sur l'utilisation d'au moins un autre satellite, dit satellite miroir, qui reçoit également ledit signal parasite. Le satellite principal et le satellite miroir retransmettent tous deux le signal parasite à destination de stations terrestres respectives d'un système de localisation, et les signaux parasites reçus par ces stations terrestres peuvent être utilisés pour déterminer la localisation de l'émetteur parasite.

De manière conventionnelle, la localisation de l'émetteur parasite peut alors être déterminée en fonction notamment de mesures de la différence :
- entre l'instant d'arrivée du signal parasite sur le satellite principal et l'instant d'arrivée dudit signal parasite sur le satellite miroir, dites « mesures TDOA » (« Time Différence of Arrivai »),
- entre la fréquence d'arrivée du signal parasite sur le satellite principal et la fréquence d'arrivée dudit signal parasite sur le satellite miroir, dites « mesures FDOA » (« Frequency Différence of Arrivai »).

Le principal inconvénient des méthodes de localisation actuelles réside dans le fait que l'existence d'un satellite miroir, pour un satellite principal donné recevant un signal parasite, ne peut pas toujours être garantie. En effet, l'existence d'un satellite miroir repose sur de nombreuses contraintes :
- le satellite principal et le satellite miroir doivent comporter chacun un canal, sur leurs liens montants respectifs, couvrant à la fois la fréquence du signal parasite de l'émetteur terrestre et la zone géographique dans laquelle se trouve ledit émetteur parasite,
- le satellite principal et le satellite miroir doivent disposer, dans chacune des zones géographiques couvertes par leurs liens descendants respectifs, d'une station terrestre du système de localisation afin de permettre la collecte des signaux parasites retransmis par ledit satellite principal et ledit satellite miroir (pour pouvoir, in fine, déterminer des mesures TDOA et des mesures FDOA).

Afin de garantir l'existence d'un satellite miroir pour un satellite principal en orbite géosynchrone, il est connu du brevet FR 2801682 B1 d'utiliser un satellite de mesure, dédié à la fonction miroir, en orbite défilante basse ou moyenne. L'orbite défilante du satellite de mesure est telle que ledit satellite de mesure couvre, au moins temporairement, la zone géographique couverte par le satellite principal.

Toutefois, le système de localisation décrit par le brevet FR 2801682 B1 nécessite toujours de disposer, dans chacune des zones géographiques couvertes par les liens descendants respectifs du satellite principal et du satellite de mesure, d'une station terrestre du système de localisation, ce qui ne peut pas toujours être garanti.

### EXPOSÉ DE L'INVENTION

La présente invention a pour objectif de remédier à tout ou partie des limitations des solutions de l'art antérieur, notamment celles exposées ci-avant, en proposant une solution qui permette de garantir l'existence d'un satellite miroir pour un satellite principal.

En outre, la présente invention a également pour objectif de proposer une solution qui permette de réduire les contraintes liées à l'existence, dans chacune des zones géographiques couvertes par les liens descendants respectifs du satellite principal et du satellite miroir, d'une station terrestre du système de localisation.

A cet effet, et selon un premier aspect, l'invention concerne une charge utile d'un satellite de mesure d'un système de localisation d'un émetteur terrestre d'un signal cible reçu par un satellite principal en orbite terrestre sur un lien montant dudit satellite principal, ladite charge utile étant destinée à être placée avec ledit satellite de mesure en orbite terrestre défilante interceptant un lien descendant dudit satellite principal, ladite charge utile comportant un module de réception directe adapté à mesurer ledit signal cible reçu directement de l'émetteur terrestre. La charge utile comporte en outre un module de réception indirecte adapté à mesurer le signal cible retransmis par le satellite principal sur le lien descendant dudit satellite principal, et un module de transfert adapté à émettre, à destination d'une station terrestre du système de localisation :
- un groupe de signaux, dits signaux homologues, mesurés par le module de réception directe et le module de réception indirecte et correspondant au signal cible reçu respectivement de l'émetteur terrestre et du satellite principal, et/ou
- des données déterminées à partir desdits signaux homologues.

Ainsi, l'invention repose sur l'utilisation d'une charge utile embarquée dans un satellite de mesure en orbite terrestre défilante, de sorte qu'il sera toujours possible, par un choix adapté de l'orbite terrestre défilante, de recevoir le signal cible émis par l'émetteur terrestre, c'est-à-dire assurer la fonction miroir pour la localisation dudit émetteur terrestre.

En outre, le satellite de mesure embarquant cette charge utile assure également une autre fonction, à savoir une fonction de collecte du signal cible retransmis par le satellite principal sur son lien descendant.

Ainsi, il n'est plus nécessaire de disposer d'une station terrestre du système de localisation dans la zone géographique couverte par le lien descendant du satellite principal, puisque c'est le satellite de mesure qui collecte le signal cible retransmis par le satellite principal, en même temps qu'il assure la fonction miroir pour la localisation de l'émetteur terrestre.

Dans des modes particuliers de réalisation, la charge utile peut comporter en outre l'une ou plusieurs des caractéristiques suivantes, prises isolément ou selon toutes les combinaisons techniquement possibles.

Dans des modes particuliers de réalisation, la charge utile comporte un module de traitement adapté à mémoriser les signaux homologues.

De telles dispositions sont particulièrement avantageuses en ce qu'il n'est alors plus nécessaire de disposer d'une station terrestre du système de localisation dans la zone géographique couverte par le lien descendant du satellite de mesure lors de la mesure des signaux homologues. En effet, du fait de cette capacité de mémorisation de la charge utile du satellite de mesure, le transfert des signaux homologues (ou de données déduites desdits signaux homologues) pourra être différé dans le temps jusqu'à ce que la zone géographique couverte par le lien descendant dudit satellite de mesure (qui varie au cours du temps du fait que ledit satellite de mesure est en orbite terrestre défilante) englobe une station terrestre du système de localisation.

Dans des modes particuliers de réalisation, la charge utile comporte un oscillateur local commun au module de réception directe et au module de réception indirecte.

Dans les systèmes de localisation de l'art antérieur, de nombreuses chaines de réception indépendantes les unes des autres sont mises en oeuvre au niveau du satellite miroir, du satellite principal et des stations terrestres du système de localisation. Ces chaînes de réception comportent notamment des oscillateurs locaux respectifs qui introduisent des instabilités fréquentielles respectives indépendantes les unes des autres, qui impactent la précision des mesures fréquentielles. Du fait qu'un même oscillateur local est utilisé à la fois par le module de réception directe (fonction miroir) et par le module de réception indirecte (fonction collecte du signal cible retransmis par le satellite principal, assurée par une station terrestre dans les systèmes de localisation de l'art antérieur), la précision des mesures fréquentielles et, in fine celle de la localisation de l'émetteur terrestre, est améliorée. En effet, les instabilités fréquentielles introduites par cet oscillateur local sont les mêmes pour chacun des signaux homologues, et sont supprimées par une analyse différentielle desdits signaux homologues.

Dans des modes particuliers de réalisation, le module de réception directe et le module de réception indirecte comportent chacun plusieurs chaînes de réception radioélectriques adaptées à recevoir des signaux dans des bandes fréquentielles respectives différentes.

Dans des modes particuliers de réalisation, la charge utile comporte un module d'émission d'un signal de calibration sur le lien montant du satellite principal. Le signal de calibration est par exemple un signal du type à spectre étalé par un code d'étalement de spectre.

Selon un second aspect, la présente invention concerne un système de localisation d'un émetteur terrestre d'un signal cible reçu par un satellite principal en orbite terrestre sur un lien montant dudit satellite principal, comportant :
- un satellite de mesure comportant une charge utile selon l'un quelconque des modes de réalisation de l'invention, ledit satellite de mesure étant en orbite terrestre défilante interceptant un lien descendant dudit satellite principal,
- des moyens configurés pour déterminer des informations de localisation de l'émetteur terrestre par comparaison des signaux homologues mesurés par ledit satellite de mesure,
- des moyens configurés pour déterminer la localisation de l'émetteur terrestre en fonction des informations de localisation.

Dans des modes particuliers de réalisation, le système de localisation peut comporter en outre l'une ou plusieurs des caractéristiques suivantes, prises isolément ou selon toutes les combinaisons techniquement possibles.

Dans des modes particuliers de réalisation, les moyens configurés pour déterminer les informations de localisation sont embarqués dans le satellite de mesure.

Dans des modes particuliers de réalisation, les moyens configurés pour déterminer la localisation de l'émetteur terrestre sont embarqués dans le satellite de mesure, et le module de transfert est configuré pour émettre la localisation de l'émetteur terrestre à destination d'une station terrestre.

Dans des modes particuliers de réalisation, le module de transfert est configuré pour émettre les informations de localisation à destination d'une station terrestre, et les moyens configurés pour déterminer la localisation de l'émetteur terrestre sont embarqués dans une ou plusieurs stations terrestres.

Dans des modes particuliers de réalisation, le module de transfert est configuré pour émettre les signaux homologues à destination d'une station terrestre, et les moyens configurés pour déterminer les informations de localisation et les moyens configurés pour déterminer la localisation de l'émetteur terrestre sont embarqués dans une ou plusieurs stations terrestres.

Dans des modes particuliers de réalisation, des informations de localisation d'au moins un type sont déterminées, parmi les types suivants :
- différence entre l'instant d'arrivée du signal cible reçu par le module de réception directe et l'instant d'arrivée du signal cible reçu par le module de réception indirecte,
- différence entre la fréquence d'arrivée du signal cible reçu par le module de réception directe et la fréquence d'arrivée du signal cible reçu par le module de réception indirecte,
- différence entre la fréquence Doppler d'arrivée du signal cible reçu par le module de réception directe et la fréquence Doppler d'arrivée du signal cible reçu par le module de réception indirecte.

Selon un troisième aspect, la présente invention concerne un procédé de localisation d'un émetteur terrestre d'un signal cible reçu par un satellite principal en orbite terrestre sur un lien montant dudit satellite principal, comportant des étapes de :
- mesure d'un groupe de signaux homologues par un satellite de mesure comportant une charge utile selon l'un quelconque des modes de réalisation de l'invention,
- détermination d'informations de localisation de l'émetteur terrestre par comparaison des signaux homologues mesurés par ledit satellite de mesure,
- détermination de la localisation de l'émetteur terrestre en fonction des informations de localisation.

Dans des modes particuliers de mise en oeuvre, le procédé de localisation peut comporter en outre l'une ou plusieurs des caractéristiques suivantes, prises isolément ou selon toutes les combinaisons techniquement possibles.

Dans des modes particuliers de mise en oeuvre, des informations de localisation d'au moins un type sont déterminées, parmi les types suivants :
- différence entre l'instant d'arrivée du signal cible reçu par le module de réception directe et l'instant d'arrivée du signal cible reçu par le module de réception indirecte,
- différence entre la fréquence d'arrivée du signal cible reçu par le module de réception directe et la fréquence d'arrivée du signal cible reçu par le module de réception indirecte,
- différence entre la fréquence Doppler d'arrivée du signal cible reçu par le module de réception directe et la fréquence Doppler d'arrivée du signal cible reçu par le module de réception indirecte.

Dans des modes particuliers de mise en oeuvre, plusieurs groupes de signaux homologues sont mesurés à des instants de mesure respectifs différents, et des informations de localisation sont déterminées pour chaque groupe de signaux homologues.

Dans des modes particuliers de mise en oeuvre, des informations de localisation différentielles sont déterminées en fonction des informations de localisation déterminées pour des instants de mesure différents.

Dans des modes particuliers de mise en oeuvre, le procédé de localisation comporte des étapes de :
- émission, par le satellite de mesure, d'un signal de calibration sur le lien montant du satellite principal,
- détermination d'informations de calibration par comparaison du signal de calibration émis par le satellite de mesure avec le signal correspondant audit signal de calibration reçu par le module de réception indirecte dudit satellite de mesure,
- calibration des informations de localisation en fonction des informations de calibration.

Selon un quatrième aspect, la présente invention concerne un produit programme d'ordinateur comportant un ensemble d'instructions de code de programme qui, lorsqu'elles sont exécutées par un processeur, configurent ledit processeur pour mettre en oeuvre un procédé de localisation d'un émetteur terrestre selon l'un quelconque des modes de mise en oeuvre de l'invention.

### PRÉSENTATION DES FIGURES

L'invention sera mieux comprise à la lecture de la description suivante, donnée à titre d'exemple nullement limitatif, et faite en se référant aux figures qui représentent :
- Figure 1 : une représentation schématique d'un exemple de réalisation d'un système de localisation,
- Figure 2 : un diagramme représentant les principales étapes d'un exemple de mise en oeuvre d'un procédé de localisation,
- Figure 3 : une représentation schématique d'un mode préféré de réalisation d'un satellite de mesure pour un système de localisation,
- Figure 4 : un diagramme représentant les principales étapes d'un mode préféré de mise en oeuvre d'un procédé de localisation.

Dans ces figures, des références identiques d'une figure à une autre désignent des éléments identiques ou analogues. Pour des raisons de clarté, les éléments représentés ne sont pas à l'échelle, sauf mention contraire.

### DESCRIPTION DÉTAILLÉE DE MODES DE RÉALISATION

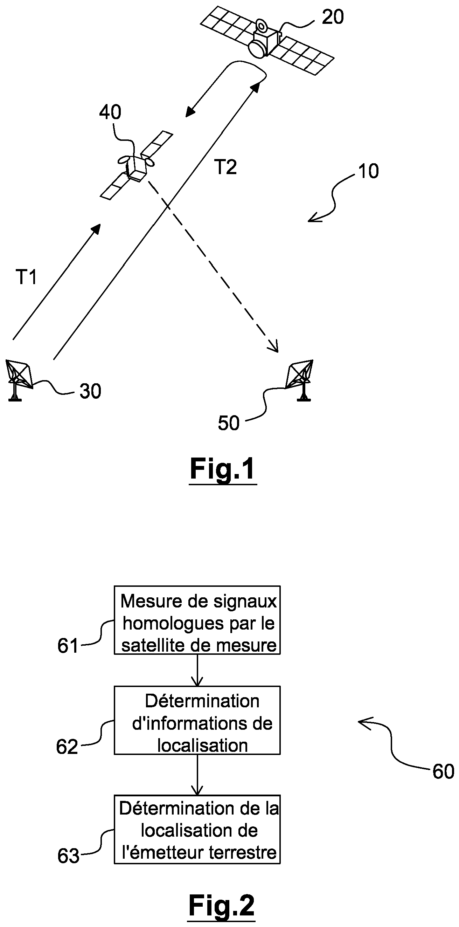

La figure 1 représente schématiquement un exemple de réalisation d'un système 10 de localisation d'un émetteur 30 terrestre d'un signal cible qui est reçu par un satellite en orbite terrestre, dit « satellite 20 principal », appartenant à un système de télécommunications par satellite.

On entend par « satellite d'un système de télécommunications par satellite » tout satellite adapté à recevoir, sur un lien montant, des données émises depuis la Terre, et à retransmettre (de façon transparente ou régénérative), sur un lien descendant, tout ou partie desdites données à destination de la Terre.

Tel qu'illustré par la figure 1, le système 10 de localisation comporte un satellite 40 de mesure en orbite terrestre défilante.

De manière générale, l'invention est applicable à tout type d'orbites terrestres pour le satellite 20 principal et le satellite 40 de mesure, dès lors que l'orbite terrestre défilante du satellite 40 de mesure intercepte le lien descendant du satellite 20 principal, c'est-à-dire dès lors que le satellite 40 de mesure sur cette orbite terrestre défilante peut se trouver au moins temporairement dans une position dans laquelle il peut recevoir des données retransmises sur le lien descendant par ledit satellite 20 principal.

L'orbite terrestre défilante du satellite 40 de mesure doit, à cet effet, être d'altitude inférieure à celle de l'orbite terrestre du satellite 20 principal. La présente invention trouve donc une application particulièrement avantageuse, bien que nullement limitative, dans le cas d'un satellite 20 principal en orbite géosynchrone et dans le cas d'un satellite 40 de mesure en orbite basse ou moyenne. Dans la suite de la description, on se place de manière non limitative dans le cas où le satellite 20 principal est en orbite géostationnaire (GEO). Le satellite 40 de mesure est par exemple quelques milliers de kilomètres sous l'arc géostationnaire, ce qui va le faire défiler par rapport au satellite 20 principal en orbite GEO et, de manière plus générale, par rapport à tous les satellites en orbite GEO. Un même satellite 40 de mesure peut donc être mis en oeuvre, au cours du temps, pour la localisation d'émetteurs terrestres par rapport à différents satellites en orbite GEO.

Tel qu'illustré par la figure 1, le satellite 40 de mesure, sur une telle orbite terrestre défilante, est donc adapté à recevoir le signal cible de deux façons différentes :
- directement de l'émetteur 30 terrestre, via un trajet direct T1 entre ledit émetteur 30 terrestre et le satellite 40 de mesure,
- par l'intermédiaire du satellite 20 principal, via un trajet indirect T2, ledit satellite 20 principal retransmettant sur son lien descendant le signal cible reçu sur son lien montant.

Avantageusement, le satellite 40 de mesure embarque donc une charge utile comportant un module 41 de réception directe adapté à mesurer ledit signal cible reçu sur le trajet direct T1, et un module 42 de réception indirecte adapté à mesurer le signal cible reçu sur le trajet indirect T2. Le module 41 de réception directe et le module 42 de réception indirecte se présentent par exemple tous deux sous la forme de chaînes de réception radioélectriques conventionnelles, comportant chacune au moins une antenne pour la réception de signaux radioélectriques, un amplificateur faible bruit, etc.

Ainsi, le module 41 de réception directe et le module 42 de réception indirecte mesurent un groupe de signaux, dits « signaux homologues », qui correspondent au même signal cible ayant parcouru deux trajets différents, respectivement le trajet direct T1 et le trajet indirect T2.

Le satellite 40 de mesure comporte également un module 43 de transfert adapté à émettre, à destination d'une station 50 terrestre du système 10 de localisation, lesdits signaux homologues et/ou des données déterminées à partir desdits signaux homologues. Le module 43 de transfert se présente par exemple sous la forme d'une chaîne d'émission radioélectrique conventionnelle, comportant au moins une antenne pour l'émission de signaux radioélectriques, un amplificateur de puissance, etc.

Dans l'exemple non limitatif illustré par la figure 1, les signaux homologues et/ou données sont émis directement à destination de la station 50 terrestre. Rien n'exclut cependant, suivant d'autres exemples, que les signaux homologues et/ou données soient émis indirectement à ladite station 50 terrestre, par exemple par l'intermédiaire d'autres satellites (non représentés).

Les signaux homologues peuvent par exemple être transférés à la station 50 terrestre immédiatement après leur réception, en particulier si la station 50 terrestre se trouve dans la zone géographique couverte par un lien descendant dudit satellite 40 de mesure, comme c'est le cas dans l'exemple non limitatif illustré par la figure 1.

Dans des modes préférés de réalisation, la charge utile du satellite 40 de mesure comporte en outre un module 44 de traitement adapté à mémoriser les signaux homologues. De telles dispositions sont particulièrement avantageuses en ce que la station 50 terrestre ne doit pas nécessairement se trouver dans la zone géographique couverte par le lien descendant du satellite 40 de mesure. En effet, les signaux homologues peuvent être mémorisés jusqu'à l'entrée d'une station 50 terrestre dans ladite zone géographique, suite au défilement dudit satellite 40 de mesure. Le système 10 de localisation ainsi obtenu peut donc fonctionner de manière autonome sans disponibilité immédiate d'une station 50 terrestre, puisque les signaux homologues sont collectés et mémorisés par le satellite 40 de mesure.

Le module 44 de traitement comporte par exemple des moyens de conversion analogique/numérique, au moins un processeur et au moins une mémoire électronique dans laquelle est mémorisé un produit programme d'ordinateur, sous la forme d'un ensemble d'instructions de code de programme à exécuter pour effectuer les opérations effectuées par la charge utile du satellite 40 de mesure, relatives à la localisation de l'émetteur 30 terrestre, en particulier les opérations visant à mémoriser les signaux homologues. Alternativement ou en complément, le module 44 de traitement peut comporter un ou des circuits logiques programmables (FPGA, PLD, etc.), et/ou un ou des circuits intégrés spécialisés (ASIC), et/ou un ensemble de composants électroniques discrets, etc., adaptés à mettre en oeuvre tout ou partie desdites opérations effectuées par la charge utile du satellite 40 de mesure, relatives à la localisation de l'émetteur 30 terrestre.

En d'autres termes, le module 44 de traitement comporte un ensemble de moyens configurés de façon logicielle (produit programme d'ordinateur spécifique) et/ou matérielle (FPGA, PLD, ASIC, composants électroniques discrets, etc.) pour mettre en oeuvre les opérations effectuées par la charge utile du satellite 40 de mesure, relatives à la localisation de l'émetteur 30 terrestre.

De manière analogue, la station 50 terrestre du système 10 de localisation comporte un ensemble de moyens configurés de façon logicielle (produit programme d'ordinateur spécifique) et/ou matérielle (FPGA, PLD, ASIC, etc.) pour mettre en oeuvre les opérations effectuées par ladite station 50 terrestre, relatives à la localisation de l'émetteur 30 terrestre.

Tel qu'indiqué précédemment, le module 43 de transfert de la charge utile du satellite 40 de mesure émet, à destination de la station 50 terrestre du système 10 de localisation, les signaux homologues et/ou des données déterminées à partir desdits signaux homologues. Dans le cas où des données sont déterminées à partir desdits signaux homologues, le cas échéant par le module 44 de traitement, lesdites données correspondent à des informations de localisation (discutées ci-après), voire directement la localisation de l'émetteur 30 terrestre si le satellite 40 de mesure.

La figure 2 représente schématiquement les principales étapes d'un exemple de mise en oeuvre d'un procédé 60 de localisation, lesquelles sont :
- 61 mesure d'un groupe de signaux homologues par le satellite 40 de mesure,
- 62 détermination d'informations de localisation de l'émetteur 30 terrestre par comparaison des signaux homologues,
- 63 détermination de la localisation de l'émetteur 30 terrestre en fonction des informations de localisation.

Tel qu'indiqué précédemment, les signaux homologues correspondent au même signal cible ayant parcouru deux trajets différents, respectivement le trajet direct T1 et le trajet indirect T2.

Par rapport à l'art antérieur, la mesure du signal homologue sur le trajet direct T1 correspond à la fonction miroir, tandis que la mesure du signal homologue sur le trajet indirect T2 correspond à la fonction de collecte du signal cible reçu par le satellite 20 principal.

Par conséquent, la localisation de l'émetteur 30 terrestre peut mettre en oeuvre les méthodes connues de l'homme de l'art, appliquées aux signaux homologues, et les étapes 62 de détermination d'informations de localisation et 63 de détermination de la localisation de l'émetteur 30 terrestre sont considérées comme connues de l'homme de l'art. Par exemple, il est possible de déterminer, à partir des signaux homologues, des informations de localisation d'au moins un type parmi les types suivants :
- différence entre l'instant d'arrivée du signal cible reçu par le module 41 de réception directe et l'instant d'arrivée du signal cible reçu par le module 42 de réception indirecte (mesures TDOA),
- différence entre la fréquence d'arrivée du signal cible reçu par le module 41 de réception directe et la fréquence d'arrivée du signal cible reçu par le module 42 de réception indirecte (mesures FDOA),
- différence entre la fréquence Doppler d'arrivée du signal cible reçu par le module 41 de réception directe et la fréquence Doppler d'arrivée du signal cible reçu par le module 42 de réception indirecte (mesures DDOA - « Doppler Différence of Arrivai »).

A partir de telles informations de localisation, il est possible de déduire la localisation de l'émetteur 30 terrestre éventuellement en prenant en compte des informations complémentaires, telles que les positions respectives du satellite 40 de mesure et du satellite 20 principal.

De manière connue, une mesure TDOA est proportionnelle à l'écart en distance entre d'une part le satellite 20 principal et l'émetteur 30 terrestre, et d'autre part la somme de :
- la distance entre le satellite 20 principal et le satellite 40 de mesure (qui peut être calculée en connaissant leurs positions respectives),
- la distance entre le satellite 20 principal et l'émetteur 30 terrestre.

Une mesure FDOA est liée à la vitesse relative entre les différents objets considérés, tandis qu'une mesure DDOA est liée à l'évolution de la vitesse relative entre les différents objets considérés.

Pour chacune de ces mesures TDOA, ou FDOA, ou DDOA, on peut identifier l'ensemble des points compatibles sur la Terre, sous la forme de courbes iso-TDOA, ou iso-FDOA ou iso-DDOA. Les intersections entre ces courbes permettent de déterminer la localisation de l'émetteur 30 terrestre.

Dans des modes particuliers de mise en oeuvre, des informations de localisation d'au moins deux types différents parmi les types ci-dessus sont déterminées au cours de l'étape 62.

En complément ou en alternative, le procédé 60 de localisation comporte, dans des modes particuliers de mise en oeuvre, la mesure de plusieurs groupes de signaux homologues à des instants de mesure respectifs différents, des informations de localisation étant déterminées pour chaque groupe de signaux homologues. De telles dispositions permettent d'améliorer la précision de la localisation de l'émetteur 30 terrestre.

Dans des modes préférés de mise en oeuvre, le procédé 60 de localisation comporte la détermination d'informations de localisation différentielles par comparaison des informations de localisation déterminées pour des instants de mesure différents, la localisation de l'émetteur 30 terrestre étant déterminée en fonction desdites informations de localisation différentielles. Par exemple, dans le cas de mesures TDOA, les informations de localisation différentielles correspondent à la différence entre des mesures TDOA associées à des instants de mesure différents (mesures DTDOA - « Differential Time Différence of Arrivai »). De même, pour des mesures FDOA, les informations de localisation différentielles correspondent à la différence entre des mesures FDOA associées à des instants de mesure différents (mesures DFDOA - « Differential Frequency Différence of Arrivai »), etc.

L'utilisation d'informations de localisation différentielles est avantageuse dans de nombreux cas.

Par exemple, l'utilisation de mesures TDOA n'est pas possible pour des signaux cibles sensiblement sinusoïdaux (signaux CW - « Continuous Wave »). L'utilisation de mesures FDOA et/ou de mesures DDOA peut alors s'avérer insuffisante pour lever les ambiguïtés sur la position de l'émetteur 30 terrestre. Ces ambiguïtés pourront le plus souvent être levées au moyen de mesures DFDOA et/ou de mesures DDDOA.

En outre, l'utilisation de mesures FDOA et/ou de mesures DDOA est complexe dans le cas d'émetteurs 30 terrestres mobiles. De tels émetteurs 30 terrestres mobiles pourront cependant être localisés en utilisant des mesures DTDOA.

En outre, dans les systèmes de localisation de l'art antérieur, il est généralement nécessaire d'utiliser une ou plusieurs stations terrestres de positions connues, dites « stations de référence », pour émettre un signal de référence connu en direction du satellite principal et du satellite miroir, afin de déterminer des biais de mesure et les compenser. Par exemple, les mesures TDOA sont généralement affectées par des biais de mesure liés à la latence interne du satellite principal, la latence interne du satellite miroir, etc. Les mesures FDOA sont elles généralement affectées par des biais de mesure liés aux dérives respectives des différents oscillateurs locaux (oscillateurs locaux du satellite principal, oscillateurs locaux du satellite miroir). Les mesures DDOA sont elles généralement affectées par des biais de mesure liés aux incertitudes sur les positions respectives du satellite principal et du satellite miroir. L'utilisation d'informations de localisation différentielles permet de supprimer ces biais de mesure, sous réserve que ceux-ci puissent être considérés comme étant sensiblement constants d'un instant de mesure à un autre. Ainsi, l'utilisation d'informations de localisation différentielles permet d'avoir un système 10 de localisation dépourvu de stations de référence.

Tel qu'indiqué précédemment, les étapes 62 de détermination d'informations de localisation et 63 de détermination de la localisation de l'émetteur 30 terrestre peuvent être en tout ou partie exécutées au niveau du satellite 40 de mesure, le cas échéant par le module 44 de traitement.

Suivant un premier exemple, les informations de localisation et la localisation de l'émetteur 30 terrestre sont déterminées par le satellite 40 de mesure. Le procédé 60 de localisation comporte alors une étape de transfert de la localisation de l'émetteur 30 terrestre à destination d'une station 50 terrestre du système 10 de localisation.

Suivant un second exemple, les informations de localisation sont déterminées par le satellite 40 de mesure et la localisation de l'émetteur 30 terrestre est déterminée par une ou plusieurs stations 50 terrestres du système 10 de localisation. Le procédé 60 de localisation comporte alors une étape de transfert des informations de localisation à destination d'une station 50 terrestre dudit système 10 de localisation.

Suivant un troisième exemple, les informations de localisation et la localisation de l'émetteur 30 terrestre sont déterminées par une ou plusieurs stations 50 terrestres du système 10 de localisation. Le procédé 60 de localisation comporte alors une étape de transfert des signaux homologues à destination d'une station 50 terrestre dudit système 10 de localisation.

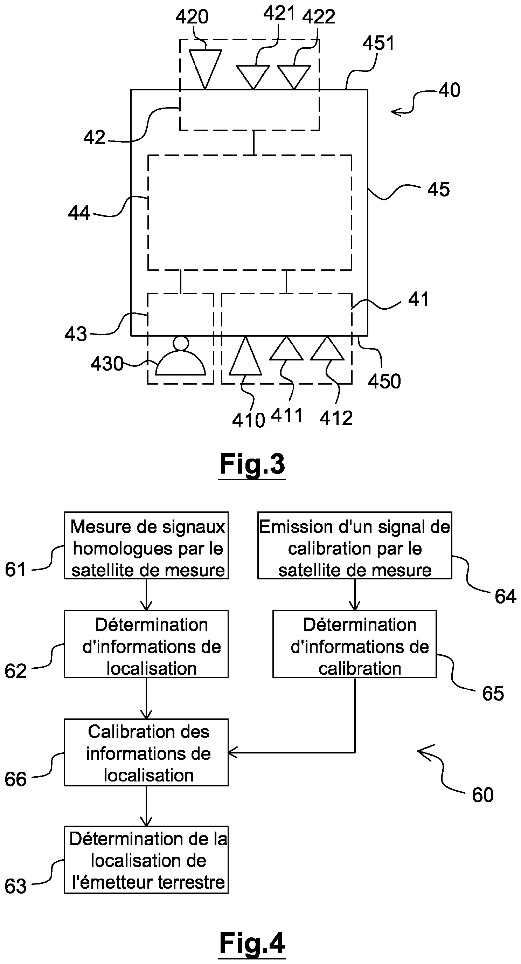

La figure 3 représente schématiquement, à titre d'exemple non limitatif, un mode préféré de réalisation d'un satellite 40 de mesure.

Tel qu'illustré par la figure 3, le satellite 40 de mesure comporte un corps 45 qui est par exemple sensiblement en forme de parallélépipède rectangle, en l'occurrence sensiblement en forme de cube dans l'exemple non limitatif illustré par la figure 3.

Les antennes respectives du module 41 de réception directe et du module 42 de réception indirecte sont par exemple agencées sur des faces opposées du corps 45 :
- pour le module 41 de réception directe : sur une face du satellite 40 de mesure, dite « face Terre » 450, destinée à être dirigée vers la Terre lors des opérations sur l'orbite terrestre défilante,
- pour le module 42 de réception indirecte : sur une face du satellite 40 de mesure, dite « face anti-Terre » 461, opposée à la face Terre 450 dudit satellite 40 de mesure.

Dans des modes préférés de réalisation, le module 41 de réception directe et le module 42 de réception indirecte comportent chacun plusieurs chaînes de réception radioélectriques adaptées à recevoir des signaux dans des bandes fréquentielles différentes.

Dans l'exemple illustré par la figure 3, le module 41 de réception directe comporte une chaîne de réception en bande C, une chaîne de réception en bande Ku et une chaîne de réception en bande Ka, comportant des antennes 410, 411, 412 respectives toutes agencées sur la face Terre 450 du corps 45. Le module 42 de réception indirecte comporte également une chaîne de réception en bande C, une chaîne de réception en bande Ku et une chaîne de réception en bande Ka, comportant des antennes 420, 421, 422 respectives toutes agencées sur la face anti-Terre 461 du corps 45.

Les antennes 410-412, 420-422 du module 41 de réception directe et du module 42 de réception indirecte peuvent être de tout type adapté à recevoir des signaux radioélectriques émis respectivement depuis la Terre et depuis le satellite 20 principal. Dans l'exemple non limitatif illustré par la figure 3, les antennes 410-412, 420-422 sont des antennes cornets, mais rien n'exclut d'utiliser d'autres types d'antennes de réception, présentant par exemple un gain d'antenne plus important pour limiter les interférences cofréquences sur le lien montant et/ou le lien descendant du satellite 40 de mesure.

Dans des modes préférés de réalisation, les chaînes de réception du module 41 de réception directe et les chaînes de réception du module 42 de réception indirecte comportent avantageusement des éléments matériels communs. En particulier, l'utilisation d'un même oscillateur local à la fois par le module 41 de réception directe et par le module 42 de réception indirecte permet d'améliorer les mesures fréquentielles.

Le module 43 de transfert comporte par exemple une chaîne d'émission radioélectrique comportant une antenne 430 pour l'émission de signaux radioélectriques (pour le transfert des signaux homologues et/ou de données déduites à partir desdits signaux homologues). Dans l'exemple illustré par la figure 3, l'antenne 430 est agencée sur la face Terre 450 du corps 45.

Dans des modes préférés de réalisation, la charge utile du satellite 40 de mesure comporte un module d'émission (non représenté) adapté à émettre un signal de calibration sur le lien montant du satellite 20 principal. Le signal de calibration est par exemple un signal du type à spectre étalé par un code d'étalement de spectre. L'utilisation d'un tel signal de calibration est avantageuse dans la mesure où le niveau du signal de calibration par unité de fréquence peut être rendu inférieur au plancher de bruit du satellite 20 principal, de sorte que le trafic des utilisateurs dudit satellite principal n'est pas perturbé.

L'émission, par le satellite 40 de mesure, d'un signal de calibration est avantageuse en ce qu'elle permet de calibrer le système 10 de localisation de manière autonome, sans avoir à utiliser de stations de référence à la surface de la Terre. En effet, en comparant le signal de calibration émis par le satellite 40 de mesure avec le signal correspondant audit signal de calibration reçu par le module 42 de réception indirecte dudit satellite 40 de mesure, il est possible, de manière conventionnelle, d'estimer des informations de calibration permettant de compenser les différents biais de mesure du système 10 de localisation. L'émission d'un tel signal de calibration par le satellite 40 de mesure permet également de caractériser le plan fréquentiel du satellite 20 principal, c'est-à-dire déterminer les associations entre les fréquences du lien montant et les fréquences du lien descendant du satellite 20 principal.

La figure 4 représente schématiquement les principales étapes d'un mode préféré de mise en oeuvre du procédé 60 de localisation utilisant un satellite 40 de mesure équipé d'un module d'émission d'un signal de calibration. Tel qu'illustré par la figure 4, le procédé 60 de localisation comporte, outre, les étapes précédemment décrites en référence à la figure 2, des étapes additionnelles de :
- 64 émission, par le satellite 40 de mesure, du signal de calibration sur le lien montant du satellite 20 principal,
- 65 détermination d'informations de calibration par comparaison du signal de calibration émis par le satellite 40 de mesure avec le signal correspondant audit signal de calibration reçu par le module 42 de réception indirecte dudit satellite 40 de mesure,
- 66 calibration des informations de localisation en fonction des informations de calibration.

Comme précédemment, les étapes 65 de détermination d'informations de calibration et 66 de calibration des informations localisation en fonction des informations de calibration peuvent être :
- exécutées intégralement au niveau du satellite 40 de mesure, le cas échéant par le module 44 de traitement,
- exécutées intégralement au niveau d'une ou de plusieurs stations 50 terrestres du système 10 de localisation, le cas échéant le signal de calibration reçu par le module 42 de réception indirecte est émis à destination d'une station 50 terrestre du système 10 de localisation,
- distribuées entre le satellite 40 de mesure et une ou plusieurs stations 50 terrestres du système 10 de localisation.

De manière plus générale, il est à noter que les modes de mise en oeuvre et de réalisation considérés ci-dessus ont été décrits à titre d'exemples non limitatifs, et que d'autres variantes sont par conséquent envisageables.

Notamment, l'invention a été décrite en considérant principalement des modes particuliers de réalisation dans lesquels le système 10 de localisation ne comporte pas de station de référence. Rien n'exclut, suivant d'autres exemples, d'utiliser des stations de référence. Notamment, l'utilisation de plusieurs stations de référence permet de s'affranchir de la connaissance des positions respectives du satellite 20 principal et du satellite 40 de mesure.

La description ci-avant illustre clairement que par ses différentes caractéristiques et leurs avantages, la présente invention atteint les objectifs qu'elle s'était fixés. En particulier, l'utilisation d'un satellite 40 de mesure en orbite défilante adaptée à intercepter le lien descendant du satellite 20 principal permet d'assurer la fonction miroir. En outre, le satellite 40 de mesure est adapté à mesurer les signaux radioélectriques émis par le satellite 20 principal sur son lien descendant, de sorte que ledit satellite 40 de mesure assure ainsi également la fonction de collecte auparavant assurée par une station terrestre dont l'existence dans la zone couverte par ledit lien descendant dudit satellite 20 principal ne pouvait pas toujours être assurée.

Tel que décrit précédemment, le système 10 de localisation peut en outre, dans des modes particuliers de réalisation, être avantageusement dépourvu de stations de référence, grâce à la détermination d'informations de localisation différentielles (mesures DTDOA, et/ou DFDOA, et/ou DDDOA) et/ou à l'émission d'un signal de calibration par le satellite 40 de mesure.

En outre, étant donné que le satellite 40 de mesure défile par rapport au satellite 20 principal, les mesures TDOA, FDOA, DDOA varient de manière plus importante que dans le cas d'un satellite principal et d'un satellite miroir tous deux en orbite GEO, de sorte que la précision sur la localisation de l'émetteur 30 terrestre sera améliorée.

## Revendications

1. Charge utile d'un satellite (40) de mesure d'un système de localisation d'un émetteur (30) terrestre d'un signal cible reçu par un satellite (20) principal en orbite terrestre sur un lien montant dudit satellite principal, ledit satellite de mesure étant destinée à être placée en orbite terrestre défilante interceptant un lien descendant dudit satellite principal, ladite charge utile comportant un module (41) de réception directe adapté à mesurer ledit signal cible reçu directement de l'émetteur terrestre, **caractérisé en ce que** ladite charge utile comporte en outre un module (42) de réception indirecte adapté à mesurer le signal cible retransmis par le satellite (20) principal sur le lien descendant dudit satellite principal, et un module (43) de transfert adapté à émettre, à destination d'une station (50) terrestre du système (10) de localisation :
- un groupe de signaux, dits signaux homologues, mesurés par le module (41) de réception directe et le module (42) de réception indirecte et correspondant au signal cible reçu respectivement de l'émetteur terrestre et du satellite principal, et/ou
- des données déterminées à partir desdits signaux homologues.

2. Charge utile selon la revendication 1, comportant un module (44) de traitement adapté à mémoriser les signaux homologues.

3. Charge utile selon l'une quelconque des revendications précédentes, comportant un oscillateur local commun au module (41) de réception directe et au module (42) de réception indirecte.

4. Charge utile selon l'une quelconque des revendications précédentes, dans lequel le module (41) de réception directe et le module (42) de réception indirecte comportent chacun plusieurs chaînes de réception radioélectriques adaptées à recevoir des signaux dans des bandes fréquentielles respectives différentes.

5. Charge utile selon l'une quelconque des revendications précédentes, comportant un module d'émission d'un signal de calibration sur le lien montant du satellite (20) principal.

6. Système (10) de localisation d'un émetteur (30) terrestre d'un signal cible reçu par un satellite (20) principal en orbite terrestre sur un lien montant dudit satellite principal, **caractérisé en ce qu'**il comporte :
- un satellite (40) de mesure comportant une charge utile selon l'une quelconque des revendications précédentes, en orbite terrestre défilante interceptant un lien descendant dudit satellite principal,
- des moyens configurés pour déterminer des informations de localisation de l'émetteur terrestre par comparaison des signaux homologues mesurés par ledit satellite (40) de mesure,
- des moyens configurés pour déterminer la localisation de l'émetteur terrestre en fonction des informations de localisation.

7. Système (10) selon la revendication 6, dans lequel les moyens configurés pour déterminer les informations de localisation sont embarqués dans le satellite (40) de mesure.

8. Système (10) selon la revendication 7, dans lequel les moyens configurés pour déterminer la localisation de l'émetteur (30) terrestre sont embarqués dans le satellite (40) de mesure, et dans lequel le module (43) de transfert est configuré pour émettre la localisation dudit émetteur terrestre à destination d'une station (50) terrestre.

9. Système (10) selon la revendication 7, dans lequel le module (43) de transfert est configuré pour émettre les informations de localisation à destination d'une station (50) terrestre, et dans lequel les moyens configurés pour déterminer la localisation de l'émetteur (30) terrestre sont embarqués dans une ou plusieurs stations (50) terrestres.

10. Système (10) selon la revendication 6, dans lequel le module (43) de transfert est configuré pour émettre les signaux homologues à destination d'une station (50) terrestre, et dans lequel les moyens configurés pour déterminer les informations de localisation et les moyens configurés pour déterminer la localisation de l'émetteur (30) terrestre sont embarqués dans une ou plusieurs stations (50) terrestres.

11. Système (10) selon l'une quelconque des revendications 6 à 10, dans lequel des informations de localisation d'au moins un type sont déterminées, parmi les types suivants :
- différence entre l'instant d'arrivée du signal cible reçu par le module (41) de réception directe et l'instant d'arrivée du signal cible reçu par le module (42) de réception indirecte,
- différence entre la fréquence d'arrivée du signal cible reçu par le module (41) de réception directe et la fréquence d'arrivée du signal cible reçu par le module (42) de réception indirecte,
- différence entre la fréquence Doppler d'arrivée du signal cible reçu par le module (41) de réception directe et la fréquence Doppler d'arrivée du signal cible reçu par le module (42) de réception indirecte.

12. Procédé (60) de localisation d'un émetteur terrestre d'un signal cible reçu par un satellite (20) principal en orbite terrestre sur un lien montant dudit satellite principal, **caractérisé en ce qu'**il comporte des étapes de :
- (61) mesure d'un groupe de signaux homologues par un satellite (40) de mesure comportant une charge utile selon l'une quelconque des revendications 1 à 5,
- (62) détermination d'informations de localisation de l'émetteur terrestre par comparaison des signaux homologues mesurés par ledit satellite (40) de mesure,
- (63) détermination de la localisation de l'émetteur terrestre en fonction des informations de localisation.

13. Procédé (60) selon la revendication 12, dans lequel des informations de localisation d'au moins un type sont déterminées, parmi les types suivants :
- différence entre l'instant d'arrivée du signal cible reçu par le module (41) de réception directe et l'instant d'arrivée du signal cible reçu par le module (42) de réception indirecte,
- différence entre la fréquence d'arrivée du signal cible reçu par le module (41) de réception directe et la fréquence d'arrivée du signal cible reçu par le module (42) de réception indirecte,
- différence entre la fréquence Doppler d'arrivée du signal cible reçu par le module (41) de réception directe et la fréquence Doppler d'arrivée du signal cible reçu par le module (42) de réception indirecte.

14. Procédé (60) selon l'une quelconque des revendications 12 à 13, dans lequel plusieurs groupes de signaux homologues sont mesurés à des instants de mesure respectifs différents, et dans lequel des informations de localisation sont déterminées pour chaque groupe de signaux homologues.

15. Procédé (60) selon la revendication 14, dans lequel des informations de localisation différentielles sont déterminées en fonction des informations de localisation déterminées pour des instants de mesure différents.

16. Procédé (60) selon l'une quelconque des revendications 12 à 15, comportant des étapes de :
- (64) émission, par le satellite (40) de mesure, d'un signal de calibration sur le lien montant du satellite principal,
- (65) détermination d'informations de calibration par comparaison du signal de calibration émis par le satellite (40) de mesure avec le signal correspondant audit signal de calibration reçu par le module (42) de réception indirecte dudit satellite (40) de mesure,
- (66) calibration des informations de localisation en fonction des informations de calibration.

17. Produit programme d'ordinateur, **caractérisé en ce qu'**il comporte un ensemble d'instructions de code de programme qui, lorsqu'elles sont exécutées par un processeur, configurent ledit processeur pour mettre en oeuvre un procédé (60) de localisation d'un émetteur (30) terrestre selon l'une quelconque des revendications 12 à 16.

## Patentansprüche

1. Nutzlast eines Messsatelliten (40) eines Systems zur Lokalisierung eines terrestrischen Senders (30) eines Zielsignals, das von einem Hauptsatelliten (20) in Erdumlaufbahn auf einem Uplink des Hauptsatelliten empfangen wird, wobei der Messsatellit dazu bestimmt ist, in einer nichtstationären Erdumlaufbahn platziert zu werden, die einen Downlink des Hauptsatelliten abfängt, wobei die Nutzlast ein direktes Empfangsmodul (41) umfasst, das dazu geeignet ist, das direkt vom terrestrischen Sender empfangene Zielsignal zu messen, **dadurch gekennzeichnet, dass** die Nutzlast weiter ein indirektes Empfangsmodul (42) umfasst, das dazu geeignet ist, das vom Hauptsatelliten (20) auf dem Downlink des Hauptsatelliten weitergeleitete Zielsignal zu messen, und ein Übertragungsmodul (43), das dazu geeignet ist, an eine Bodenstation (50) des Lokalisierungssystems (10) zu senden:
- eine Gruppe von als homologe Signale bezeichneten Signalen, die vom direkten Empfangsmodul (41) und dem indirekten Empfangsmodul (42) gemessen werden und dem jeweils vom terrestrischen Sender und dem Hauptsatelliten empfangenen Zielsignal entsprechen, und/oder
- Daten, die auf Grundlage der homologen Signale bestimmt werden.

2. Nutzlast nach Anspruch 1, die ein Verarbeitungsmodul (44) umfasst, das dazu geeignet ist, die homologen Signale zu speichern.

3. Nutzlast nach einem der vorstehenden Ansprüche, die einen lokalen Oszillator umfasst, der dem direkten Empfangsmodul (41) und dem indirekten Empfangsmodul (42) gemein ist.

4. Nutzlast nach einem der vorstehenden Ansprüche, wobei das direkte Empfangsmodul (41) und das indirekte Empfangsmodul (42) jedes mehrere Funkempfangsketten umfassen, die dazu geeignet sind, Signale in jeweiligen unterschiedlichen Frequenzbändern zu empfangen.

5. Nutzlast nach einem der vorstehenden Ansprüche, die ein Modul zum Senden eines Kalibrierungssignals auf dem Uplink des Hauptsatelliten (20) umfasst.

6. System (10) zur Lokalisierung eines terrestrischen Senders (30) eines Zielsignals, das von einem Hauptsatelliten (20) in Erdumlaufbahn auf einem Uplink des Hauptsatelliten empfangen wird, **dadurch gekennzeichnet, dass** es umfasst:
- einen Messsatelliten (40), der eine Nutzlast nach einem der vorstehenden Ansprüche umfasst, in einer nichtstationären Erdumlaufbahn, die einen Downlink des Hauptsatelliten abfängt,
- Mittel, die dafür konfiguriert sind, Lokalisierungsinformationen des terrestrischen Senders durch Vergleichen der vom Messsatelliten (40) gemessenen homologen Signale zu bestimmen,
- Mittel, die dafür konfiguriert sind, die Lokalisierung des terrestrischen Senders in Abhängigkeit von den Lokalisierungsinformationen zu bestimmen.

7. System (10) nach Anspruch 6, wobei die Mittel, die dafür konfiguriert sind, die Lokalisierungsinformationen zu bestimmen, im Messsatelliten (40) eingebettet sind.

8. System (10) nach Anspruch 7, wobei die Mittel, die dafür konfiguriert sind, die Lokalisierung des terrestrischen Senders (30) zu bestimmen, im Messsatelliten (40) eingebettet sind, und wobei das Übertragungsmodul (43) dafür konfiguriert ist, die Lokalisierung des terrestrischen Senders an eine Bodenstation (50) zu senden.

9. System (10) nach Anspruch 7, wobei das Übertragungsmodul (43) dafür konfiguriert ist, die Lokalisierungsinformationen an eine Bodenstation (50) zu senden, und wobei die Mittel, die dafür konfiguriert sind, die Lokalisierung des terrestrischen Senders (30) zu bestimmen, in einer oder mehreren Bodenstationen (50) eingebettet sind.

10. System (10) nach Anspruch 6, wobei das Übertragungsmodul (43) dafür konfiguriert ist, die homologen Signale an eine Bodenstation (50) zu senden, und wobei die Mittel, die dafür konfiguriert sind, die Lokalisierungsinformationen zu bestimmen, und die Mittel, die dafür konfiguriert sind, die Lokalisierung des terrestrischen Senders (30) zu bestimmen, in einer oder mehreren Bodenstationen (50) eingebettet sind.

11. System (10) nach einem der Ansprüche 6 bis 10, wobei Lokalisierungsinformationen mindestens eines Typs aus den folgenden Typen bestimmt werden:
- Differenz zwischen dem Eingangszeitpunkt des vom direkten Empfangsmodul (41) empfangenen Zielsignals und dem Eingangszeitpunkt des vom indirekten Empfangsmodul (42) empfangenen Zielsignals,
- Differenz zwischen der Eingangsfrequenz des vom direkten Empfangsmodul (41) empfangenen Zielsignals und der Eingangsfrequenz des vom indirekten Empfangsmodul (42) empfangenen Zielsignals,
- Differenz zwischen der Doppler-Eingangsfrequenz des vom direkten Empfangsmodul (41) empfangenen Zielsignals und der Doppler-Eingangsfrequenz des vom indirekten Empfangsmodul (42) empfangenen Zielsignals.

12. Verfahren (60) zur Lokalisierung eines terrestrischen Senders eines Zielsignals, das von einem Hauptsatelliten (20) in Erdumlaufbahn auf einem Uplink des Hauptsatelliten empfangen wird, **dadurch gekennzeichnet, dass** es Schritte umfasst des:
- (61) Messens einer Gruppe von homologen Signalen durch einen Messsatelliten (40), der eine Nutzlast nach einem der Ansprüche 1 bis 5 umfasst,
- (62) Bestimmens von Lokalisierungsinformationen des terrestrischen Senders durch Vergleichen der vom Messsatelliten (40) gemessenen homologen Signale,
- (63) Bestimmens der Lokalisierung des terrestrischen Senders in Abhängigkeit von den Lokalisierungsinformationen.

13. Verfahren (60) nach Anspruch 12, wobei Lokalisierungsinformationen mindestens eines Typs aus den folgenden Typen bestimmt werden:
- Differenz zwischen dem Eingangszeitpunkt des vom direkten Empfangsmodul (41) empfangenen Zielsignals und dem Eingangszeitpunkt des vom indirekten Empfangsmodul (42) empfangenen Zielsignals,
- Differenz zwischen der Eingangsfrequenz des vom direkten Empfangsmodul (41) empfangenen Zielsignals und der Eingangsfrequenz des vom indirekten Empfangsmodul (42) empfangenen Zielsignals,
- Differenz zwischen der Doppler-Eingangsfrequenz des vom direkten Empfangsmodul (41) empfangenen Zielsignals und der Doppler-Eingangsfrequenz des vom indirekten Empfangsmodul (42) empfangenen Zielsignals.

14. Verfahren (60) nach einem der Ansprüche 12 bis 13, wobei mehrere Gruppen von homologen Signalen zu jeweiligen unterschiedlichen Messzeitpunkten gemessen werden, und wobei für jede Gruppe von homologen Signalen Lokalisierungsinformationen bestimmt werden.

15. Verfahren (60) nach Anspruch 14, wobei in Abhängigkeit von den für unterschiedliche Messzeitpunkte bestimmten Lokalisierungsinformationen differenzielle Lokalisierungsinformationen bestimmt werden.

16. Verfahren (60) nach einem der Ansprüche 12 bis 15, das Schritte umfasst des:
- (64) Sendens, durch den Messsatelliten (40), eines Kalibrierungssignals auf dem Uplink des Hauptsatelliten,
- (65) Bestimmens von Kalibrierungsinformationen durch Vergleichen des vom Messsatelliten (40) gesendeten Kalibrierungssignals mit dem dem Kalibrierungssignal entsprechenden, vom indirekten Empfangsmodul (42) des Messsatelliten (40) empfangenen Signal,
- (66) Kalibrierens der Lokalisierungsinformationen in Abhängigkeit von den Kalibrierungsinformationen.

17. Computerprogrammprodukt, **dadurch gekennzeichnet, dass** es einen Satz Programmcodeanweisungen umfasst, die, wenn sie von einem Prozessor ausgeführt werden, den Prozessor dafür konfigurieren, ein Verfahren (60) zur Lokalisierung eines terrestrischen Senders (30) nach einem der Ansprüche 12 bis 16 umzusetzen.

## Claims

1. A payload of a measurement satellite (40) of a system for locating a terrestrial transmitter (30) of a target signal that is received by a main satellite (20) in an Earth orbit over an uplink of said main satellite, said measurement satellite being intended to be placed in a traveling Earth orbit intercepting a downlink of said main satellite, said payload including a direct reception module (41) that is adapted to measure said target signal received directly from the terrestrial transmitter, **characterized in that** said payload further includes an indirect reception module (42) that is adapted to measure the target signal retransmitted by the main satellite (20) over the downlink of said main satellite, and a transfer module (43) that is adapted to transmit, to a ground station (50) of the locating system (10):
- a group of signals, referred to as homologous signals, that are measured by the direct reception module (41) and the indirect reception module (42) and that correspond to the target signal received from the terrestrial transmitter and from the main satellite, respectively; and/or
- data that are determined on the basis of said homologous signals.

2. The payload as claimed in claim 1, including a processing module (44) that is adapted to memorize the homologous signals.

3. The payload as claimed in any one of the preceding claims, including a local oscillator that is common to the direct reception module (41) and to the indirect reception module (42).

4. The payload as claimed in any one of the preceding claims, wherein the direct reception module (41) and the indirect reception module (42) each include multiple radio reception chains that are adapted to receive signals in different respective frequency bands.

5. The payload as claimed in any one of the preceding claims, including a module for transmitting a calibration signal over the uplink of the main satellite (20).

6. A system (10) for locating a terrestrial transmitter (30) of a target signal that is received by a main satellite (20) in an Earth orbit over an uplink of said main satellite, **characterized in that** it includes:
- a measurement satellite (40) including a payload as claimed in any one of the preceding claims, in a traveling Earth orbit intercepting a downlink of said main satellite;
- means that are configured to determine information on the location of the terrestrial transmitter by comparing the homologous signals measured by said measurement satellite (40);
- means that are configured to determine the location of the terrestrial transmitter according to the location information.

7. The system (10) as claimed in claim 6, wherein the means that are configured to determine the location information are on board the measurement satellite (40).

8. The system (10) as claimed in claim 7, wherein the means that are configured to determine the location of the terrestrial transmitter (30) are on board the measurement satellite (40), and wherein the transfer module (43) is configured to transmit the location of said terrestrial transmitter to a ground station (50).

9. The system (10) as claimed in claim 7, wherein the transfer module (43) is configured to transmit the location information to a ground station (50), and wherein the means that are configured to determine the location of the terrestrial transmitter (30) are held in one or more ground stations (50).

10. The system (10) as claimed in claim 6, wherein the transfer module (43) is configured to transmit the homologous signals to a ground station (50), and wherein the means that are configured to determine the location information and the means that are configured to determine the location of the terrestrial transmitter (30) are held in one or more ground stations (50).

11. The system (10) as claimed in any one of claims 6 to 10, wherein location information of at least one type is determined, from the following types:
- the difference between the time of arrival of the target signal received by the direct reception module (41) and the time of arrival of the target signal received by the indirect reception module (42);
- the difference between the frequency of arrival of the target signal received by the direct reception module (41) and the frequency of arrival of the target signal received by the indirect reception module (42);
- the difference between the Doppler frequency of arrival of the target signal received by the direct reception module (41) and the Doppler frequency of arrival of the target signal received by the indirect reception module (42).

12. A method (60) for locating a terrestrial transmitter of a target signal that is received by a main satellite (20) in an Earth orbit over an uplink of said main satellite, **characterized in that** it includes steps of:
- (61) measuring a group of homologous signals by means of a measurement satellite (40) including a payload as claimed in any one of claims 1 to 5;
- (62) determining information on the location of the terrestrial transmitter by comparing the homologous signals measured by said measurement satellite (40);
- (63) determining the location of the terrestrial transmitter according to the location information.

13. The method (60) as claimed in claim 12, wherein location information of at least one type is determined, from the following types:
- the difference between the time of arrival of the target signal received by the direct reception module (41) and the time of arrival of the target signal received by the indirect reception module (42);
- the difference between the frequency of arrival of the target signal received by the direct reception module (41) and the frequency of arrival of the target signal received by the indirect reception module (42);
- the difference between the Doppler frequency of arrival of the target signal received by the direct reception module (41) and the Doppler frequency of arrival of the target signal received by the indirect reception module (42).

14. The method (60) as claimed in either of claims 12 and 13, wherein multiple groups of homologous signals are measured at different respective measurement times, and wherein location information is determined for each group of homologous signals.

15. The method (60) as claimed in claim 14, wherein differential location information is determined according to the location information determined for different measurement times.

16. The method (60) as claimed in any one of claims 12 to 15, including steps of:
- (64) transmitting, by the measurement satellite (40), a calibration signal over the uplink of the main satellite;
- (65) determining calibration information by comparing the calibration signal transmitted by the measurement satellite (40) with the signal corresponding to said calibration signal received by the indirect reception module (42) of said measurement satellite (40);
- (66) calibrating the location information according to the calibration information.

17. Computer program product, **characterized in that** it includes a set of program code instructions that, when they are run by a processor, configure said processor to implement a method (60) for locating a terrestrial transmitter (30) as claimed in any one of claims 12 to 16.
